Europäisches Patentamt

European Patent Office

Office européen des brevets

(19)

(11) Numéro de publication : **0 497 070 A2**

# (12) DEMANDE DE BREVET EUROPEEN

(21) Numéro de dépôt : **91403531.6**

(22) Date de dépôt : **24.12.91**

(51) Int. Cl.⁵ : **H04N 5/32, H01J 35/06**

(30) Priorité : **28.12.90 FR 9016465**

(43) Date de publication de la demande :
**05.08.92 Bulletin 92/32**

(84) Etats contractants désignés :
**DE ES GB IT NL**

(71) Demandeur : **GENERAL ELECTRIC CGR S.A.**
**100, rue Camille-Desmoulins**
**F-92130 Issy les Moulineaux (FR)**

(72) Inventeur : **Evain, Bernard**
**Cabinet Ballot-Schmit, 7 rue Le Sueur**
**F-75116 Paris (FR)**
Inventeur : **Peyret, Olivier**
**Cabinet Ballot-Schmit, 7 rue Le Sueur**
**F-75116 Paris (FR)**
Inventeur : **Dumitrescu, Horia**
**Cabinet Ballot-Schmit, 7 rue Le Sueur**
**F-75116 Paris (FR)**

(74) Mandataire : **Ballot, Paul Denis Jacques et al**
**Cabinet Ballot-Schmit, 7, rue le Sueur**
**F-75116 Paris (FR)**

(54) **Procédé et système pour éliminer les fréquences spatiales indésirables dans l'image radiologique d'un objet.**

(57) L'invention concerne les systèmes de radiologie.
L'invention réside dans le fait que l'on irradie l'objet par une source unique de rayons X pour obtenir une première image, puis par deux sources simultanées de rayons X pour obtenir une deuxième image, les fonctions de transfert de modulation de la source unique (courbe 90) et des deux sources simultanées (courbe 91) étant telles que leur soustraction ou addition conduisent à une fonction de transfert résultante qui élimine les fréquences spatiales indésirables.
L'invention est applicable dans la radiologie pour diagnostic médical.

FIG. 14

EP 0 497 070 A2

L'invention concerne, d'une manière générale, les systèmes et appareils radiologiques qui réalisent l'image d'un objet par l'utilisation d'un rayonnement X qui irradie cet objet et d'un récepteur qui reçoit le rayonnement X qui a traversé l'objet. Elle concerne plus particulièrement un procédé et un système qui permet d'éliminer dans l'image radiologique certains éléments qui peuvent gêner l'interprétation de cette image.

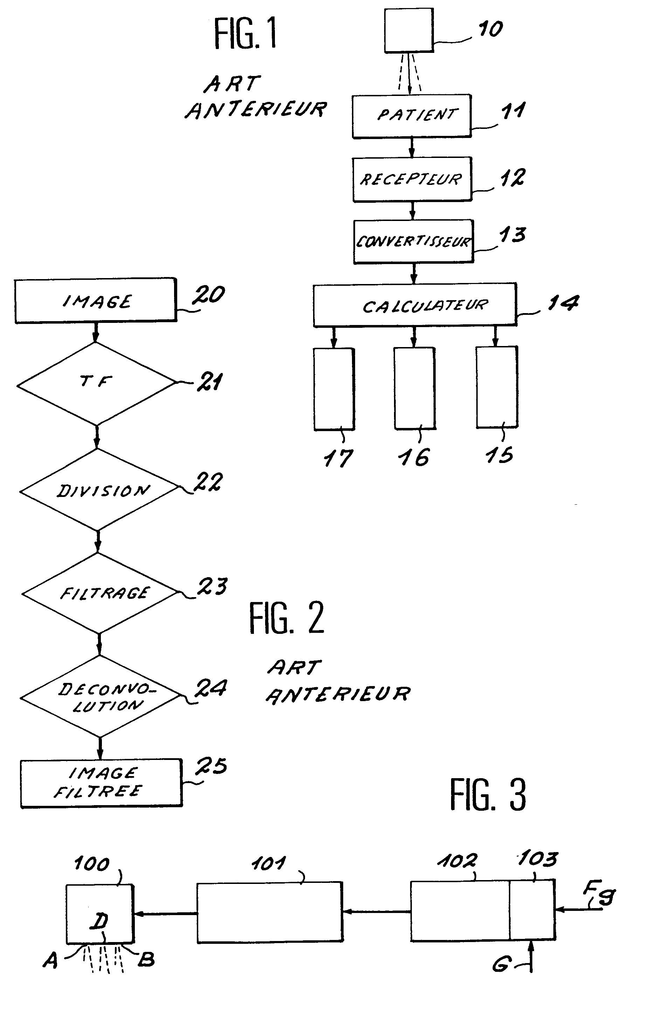

La figure 1 est un schéma fonctionnel d'un système de radiologie pour diagnostic médical qui comprend une source 10 de rayons X dont le faisceau irradie le corps 11 d'un patient; les rayons X ayant traversé le corps 11 sont détectés par un récepteur 12 qui réalise une image lumineuse de la partie du corps 11 traversée par le faisceau de rayons X. Cette image lumineuse est analysée par un convertisseur analogique/numérique 13 de manière à obtenir pour chaque point de l'image un code numérique représentatif de l'intensité lumineuse, les différents codes étant enregistrés dans une mémoire d'un calculateur 14 qui effectue différentes opérations de calcul telles que celles indiquées sur la figure 2. Les résultats de ces calculs peuvent être présentés sous différentes formes, par exemple, une image sur un dispositif de visualisation 15 ou sur un support papier 16, ou encore être mis en mémoire sur un support magnétique 17.

Il est connu qu'un objet, défini par une fonction f(x,y), est lié à son image, défini par une fonction g(x,y), par l'équation:

$$g(x,y) = h(x,y) * f(x,y) \quad (1)$$

dans laquelle h(x,y) désigne la fonction de dépendance entre les différents points de l'objet et de l'image qui est réalisée par le système radiologique, c'est-à-dire la fonction de transfert du système, x et y étant les coordonnées des points de l'objet ou de l'image. Par ailleurs, le signe * désigne la fonction de convolution. La transformée de Fourier de cette équation (1) conduit à l'équation suivante:

$$G(u,v) = H(u,v) F(u,v) \quad (2)$$

dans laquelle (u,v) sont les fréquences spatiales correspondant aux coordonnées x et y.

Le traitement de l'image 20 (figure 2) qui est effectué dans le calculateur 14 consiste, de manière schématique, à effectuer les opérations suivantes:

– calcul de la transformée de Fourier G(u,v) de l'image 20 (losange 21) réprésentée par les codes numériques fournis par le convertisseur 13 et correspondant à la fonction g(x,y);

– division de G(u,v) par la fonction de transfert du système H(u,v) qui est connue de manière à obtenir la transformée de Fourier F(u,v) de l'objet (losange 22);

– élimination des fréquences spatiales gênantes par filtrage (losange 23);

– déconvolution (losange 24) de F(u,v) de manière à obtenir une image filtrée de l'objet.

En réalité, le traitement de l'image est plus complexe car la fonction de transfert H(u,v) présente des fréquences de coupure qui correspondent à des divisions par zéro dans l'opération 22. En outre, les procédés de déconvolution nécessitent des filtrages numériques et des méthodes de conditionnement qui doivent tenir compte du bruit, ce qui conduit à des moyens de calcul très importants.

Un but de la présente invention est donc de mettre en oeuvre un procédé qui permet d'éliminer les fréquences spatiales indésirables de manière qu'elles n'apparaissent pas dans l'image 20 (figure 2), ce qui simplifie les filtrages numériques effectués dans le calculateur 14.

Un autre but de la présente invention est de mettre en oeuvre un procédé qui permet de modifier aisément les fréquences spatiales à éliminer.

Encore un autre but de la présente invention est de réaliser un système d'élimination des fréquences spatiales indésirables dans un appareil radiologique de manière qu'elles n'apparaissent pas sur l'image détectée par le récepteur.

L'invention concerne, dans un système radiologique comportant une source de rayons X irradiant un objet à examiner qui est situé à une distance c de ladite source, un récepteur situé à une distance d dudit objet pour détecter et amplifier les rayons X ayant traversé l'objet et un calculateur pour effectuer différentes opérations de calcul sur les signaux fournis par le récepteur, un procédé qui permet d'éliminer dans l'image de l'objet des fréquences spatiales $F_g$ indésirables ou des bandes de fréquences spatiales autour de $F_g$ qui comprend les opérations suivantes:

(a) réalisation d'une première image dudit objet en l'irradiant par un seul foyer de la source,

(b) réalisation d'une deuxième image dudit objet en l'irradiant par deux foyers de la source,

(c) calcul des transformées de Fourier de la première et de la deuxième images,

(d) soustraction ou addition des transformées de Fourier des première et seconde images,

(e) division du résultat de la soustraction ou de l'addition par la transformée de Fourier du récepteur et par la différence des fonctions de transfert de modulation du foyer unique et du double foyer,

(f) calcul de la déconvolution du résultat de la division.

La source unique de rayonnement X et les deux sources simultanées de rayonnement X peuvent être réalisées à l'aide d'un tube à rayons X qui comprend une cathode comportant deux filaments, chaque filament étant associé à un dispositif de focalisation et de déviation dont les caractéristiques mécaniques et électriques ainsi que les tensions appliquées sont telles qu'il donne naissance, sur une anode disposée en face de ladite cathode, soit à une seule source de rayons X de largeur a, soit à deux sources simultanées de rayons X de largeur a et séparées par une distance b qui peut être modifiée.

Les deux filaments de la cathode peuvent être identiques ou non mais, dans les deux cas, des étalonnages du tube à rayons X permettent de déterminer les tensions à appliquer aux dispositifs de focalisation et de déviation pour obtenir soit un seul foyer, soit deux foyers simultanés séparés par une distance b.

L'invention concerne également un système pour obtenir soit une seule source de rayonnement X, soit deux sources de rayonnement X de dimensions sensiblement identiques et séparées par une distance b variable, caractérisé en ce qu'il comprend un tube à rayons X comportant deux sources de rayonnement simultanées, un dispositif d'alimentation pour générer les tensions d'alimentation et de polarisation dudit tube à rayons X et un microprocesseur pour commander ledit dispositif d'alimentation, ledit microprocesseur comportant au moins une mémoire dans laquelle sont enregistrées, pour chaque fréquence $F_g$ et grandissement G, les valeurs des tensions d'alimentation et de polarisation pour obtenir soit une seule source de rayonnement X, soit deux sources simultanées de rayonnement X séparées par une distance b, ladite mémoire étant adressée pour la valeur de $F_g$ et le grandissement G.

D'autres buts, caractéristiques et avantages de la présente invention apparaîtront à la lecture de la description suivante d'un exemple particulier de réalisation, ladite description étant faite en relation avec les dessins joints dans lesquels:

- la figure 1 est un schéma fonctionnel d'un système de radiologie de type numérique selon l'art antérieur,
- la figure 2 est un diagramme simplifié des opérations qui sont effectuées par le calculateur 14 du système de radiologie de la figure 1,
- la figure 3 est un schéma fonctionnel simplifié d'un système selon l'invention pour modifier certaines caractéristiques d'une source de rayons X de manière à obtenir un ou deux foyers;
- la figure 4 est un diagramme représentant les positions respectives du foyer, de l'objet et du récepteur dans un appareil radiologique,
- la figure 5 est un diagramme représentant la répartition énergétique théorique de deux foyers voisins et leur position respective,
- la figure 6 sont des diagrammes permettant de déterminer la courbe de fonction de transfert de modulation d'un émetteur de rayons X comportant deux foyers identiques,
- la figure 7 est un diagramme analogue à celui de la figure 6 mais avec un axe des abscisses gradué,
- la figure 8 est un diagramme donnant la courbe de la fonction de transfert de modulation d'un récepteur de rayons X tel qu'un film radiologique,
- la figure 9 est un diagramme donnant la courbe de la fonction de transfert de modulation d'une chaîne image comportant un émetteur à deux foyers et un récepteur,
- les figures 10, 11 et 12 sont des schémas de cathode d'un tube à rayons X qui permettent d'obtenir un ou deux foyers;
- les figures 13-a, 13-b et 13-c sont des diagrammes qui permettent de déterminer les tensions à appliquer aux électrodes de focalisation et de déviation d'un tube à rayons X pour obtenir des foyers ayant des caractéristiques souhaitées,
- la figure 14 montre des diagrammes de fonctions de transfert de modulation pour un foyer unique et pour un double foyer, et
- la figure 15 est un diagramme de la fonction de transfert de modulation qui résulte de la soustraction des courbes 90 et 91 de la figure 14,
- la figure 16 est un schéma fonctionnel d'un système de radiologie de type numérique selon l'invention, et
- la figure 17 est un diagramme des opérations qui sont effectuées, conformément à l'invention, par le calculateur 114 de la figure 16.

Afin d'éliminer des objets de fréquence spatiale $F_g$ dans l'image détectée par un récepteur radiologique, l'invention propose notamment d'utiliser un tube à rayons X qui comporte deux foyers ayant une largeur a et un espacement b tels que la fonction de transfert de modulation présente une fréquence de coupure pour la fréquence spatiale $F_g$.

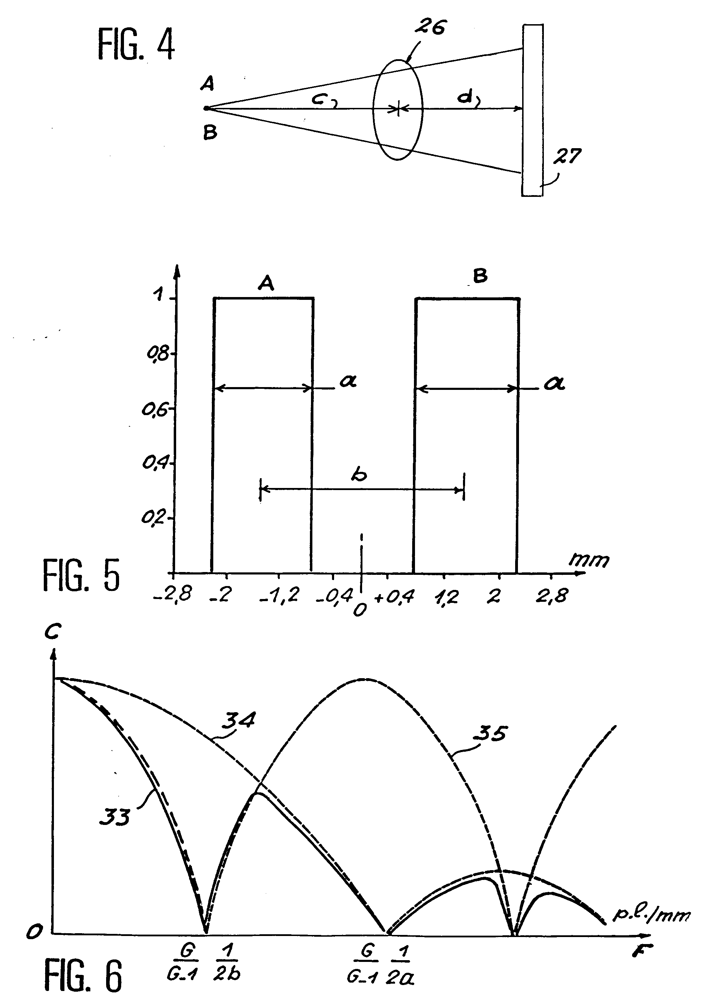

La manière dont une telle élimination est obtenue sera expliquée à l'aide des diagrammes des figures 4 à 9.

Le diagramme de la figure 4 indique les positions respectives des foyers A et B, d'un objet 26 à examiner tel et d'un récepteur 27 tel qu'un tube intensificateur d'image ou un film radiologique. Si c est la distance entre les foyers et l'objet 26 et d la distance entre l'objet 26 et le récepteur 27, on définit le grandissement G comme le rapport

$$G = \frac{c + d}{c}$$

La figure 5 donne la répartition énergétique théorique des foyers A et B en fonction de leur abscisse par rapport à un point milieu 0. Pour chaque foyer, cette répartition a une forme rectangulaire qui est supposée parfaite.

La fonction de transfert de modulation des deux foyers A et B présentant la répartition énergétique du diagramme de la figure 5, qui est donnée par le module de la fonction de transfert optique, est représentée par la courbe 33 en trait plein de la figure 6. Sur cette figure 6, l'axe des ordonnées est gradué en valeurs de contraste de 0 à 1 définies comme le rapport C tel que :

$$C = \frac{I_{max} - I_{min}}{I_{max} + I_{min}}$$

$I_{max}$ étant la valeur maximum et $I_{min}$ étant la valeur minimum de l'intensité lumineuse.

L'axe des abscisses est gradué en fréquence spectrale F et, plus précisément, en paires de lignes par millimètre, ce qui pour une grille anti-diffusante signifie le nombre de paires de lames opaques par millimètre (p.l./mm).

Cette courbe 33 est le produit des deux courbes 34 et 35 en tirets. La courbe 34 est du type module de

$$\frac{\sin x}{x}$$

et ne dépend que de la largeur a des foyers A et B. La courbe 35 est du type module de cos y et ne dépend que de l'espacement b des foyers A et B.

Eu égard au fait que b est en général supérieur à a, la première valeur de la fréquence spatiale pour laquelle le contraste s'annule est donné par :

$$\frac{G}{G-1} \cdot \frac{1}{2b}$$

c'est-à-dire par la courbe du type $|\cos y|$.

D'une manière générale, les fréquences spatiales pour lesquelles $|\cos y| = 0$ sont données par :

$$F_{oy} = (2k + 1) \cdot \frac{G}{G-1} \cdot \frac{1}{2b} \text{ avec } k \geqq 0 \quad (1)$$

La deuxième valeur de la fréquence spatiale pour laquelle le contraste s'annule est donnée par

$$\frac{G}{G-1} \cdot \frac{1}{a} \quad (4)$$

c'est-à-dire par la courbe du type

$$\left| \frac{\sin x}{x} \right|$$

dans le cas où b < 3a

D'une manière générale, les fréquences spatiales pour lesquelles

$$\left| \frac{\sin x}{x} \right| = 0$$

sont données par :

$$F_{ox} = 2k \cdot \frac{G}{G-1} \cdot \frac{1}{2a} \text{ avec } k \geqq \underline{1} \quad (5)$$

La courbe résultante 33, qui est le produit des courbes 34 et 35, montre que pour éliminer dans l'image un objet ayant une fréquence spatiale Fg, il faut choisir, pour un grandissement G donné, une valeur de l'espacement b tel que :

$$F_g = \frac{G}{G-1} \cdot \frac{1}{2b} \quad (6)$$

soit

$$b = \frac{G}{G-1} \cdot \frac{1}{2F_g} \quad (7)$$

La fonction de transfert de modulation des foyers A et B telle que représentée par la courbe 33 de la figure

4

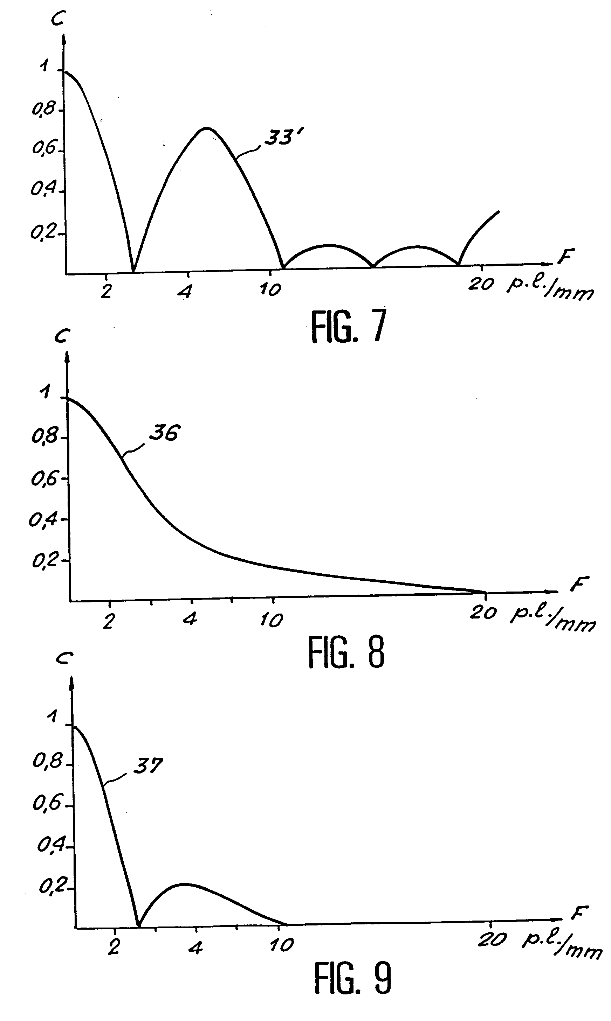

6 ou la courbe 33′ de la figure 7 ne tient pas compte de la fonction de transfert de modulation du récepteur représentée par la courbe 36 de la figure 8. S'il en est tenu compte, la fonction de transfert de modulation de la chaîne image est représentée par la courbe 37 de la figure 9 qui est le produit des courbes 33′ et 36.

La courbe 33′ de la figure 7 est similaire à la courbe 33 de la figure 6 mais elle a été tracée avec la même échelle des abscisses que celle des figures 8 et 9. Dans le cas d'un récepteur 27 du type intensificateur d'image qui est suivi d'un calculateur du type de celui décrit en relation avec les figures 1 et 2, l'invention propose de réaliser deux images du même objet, l'une avec un seul foyer et l'autre avec deux foyers A et B, puis d'effectuer une soustraction ou une addition des transformées de Fourier des deux images afin d'obtenir la transformée de Fourier d'une troisième image quine comporte plus les fréquences spectrales éliminées par l'opération de soustraction ou d'addition. C'est sur cette transformée de Fourier de cette troisième image que sont effectuées les opérations de calcul définies par les losanges 22 et 24, l'opération de filtrage du losange 23 n'étant plus nécessaire pour éliminer les fréquences gênantes du fait de la mise en oeuvre du procédé selon l'invention.

De manière plus précise, l'équation (1) peut s'écrire:

$$g(x,y) = p(x,y) * r(x,y) * f(x,y) \quad (8)$$

dans laquelle $p(x,y)$ est la fonction définissant le profil de la source, soit $p_1(x,y)$ pour un foyer ou $p_2(x,y)$ pour deux foyers, et $r(x,y)$ est la fonction définissant la fonction du récepteur 27. En réalisant la transformée de Fourier de l'image obtenue avec un seul foyer, on obtient:

$$G_1(u,v) = P_1(u,v) R(u,v) F(u,v) \quad (9)$$

De même, en réalisant la transformée de Fourier de l'image obtenue avec deux foyers, on obtient:

$$G_2(u,v) = P_2(u,v) R(u,v) F(u,v) \quad (10)$$

Par soustraction des relations (9) et (10), on obtient:

$$G_3(u,v) = P_3(u,v) R(u,v) F(u,v) \quad (11)$$

qui définit la transformée de Fourier d'une troisième image dans laquelle $P_3(u,v) = P_1(u,v) - P_2(u,v)$ dépend des caractéristiques de la source de rayons X et est donc connue du fait que les transformées $P_1$ et $P_2$ peuvent être déterminées.

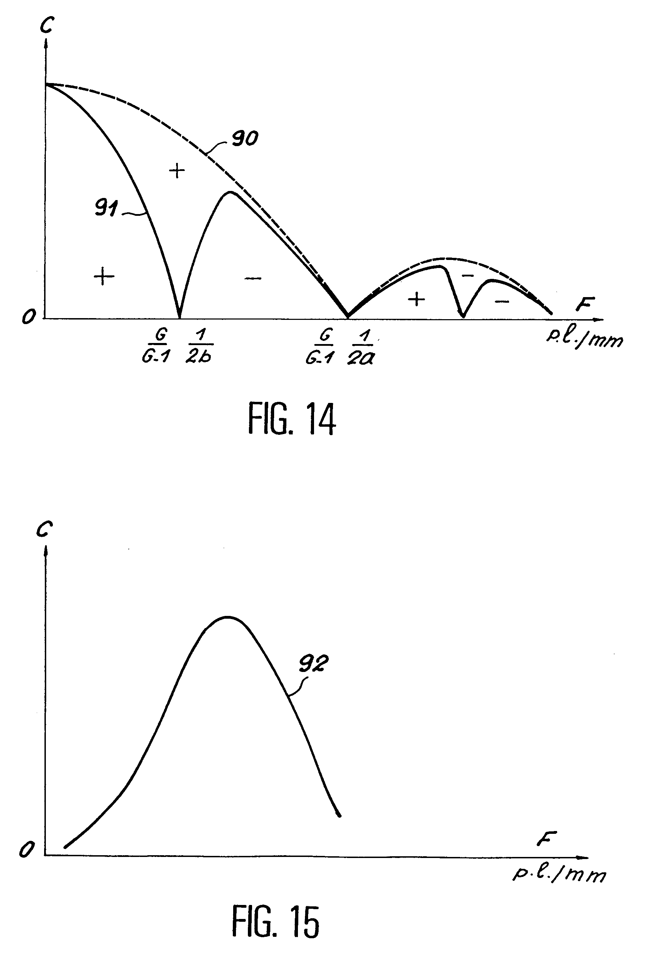

Ainsi la transformée $P_1$ est la fonction de tranfert de modulation d'un foyer unique qui est du type $(\sin x/x)$(courbe 90 de la figure 14 similaire à la courbe 34 de la figure 6) tandis que la transformée $P_2$ est la fonction de tranfert de modulation de deux foyers représentée par la courbe 91 de la figure 14 qui est identique à la courbe 33 de la figure 6.

Ainsi la courbe 90 est définie par l'équation :

$$C_1 = \frac{\sin\frac{\pi(G-1)af}{G}}{\frac{\pi(G-1)af}{G}} \quad (12)$$

tandis que la courbe 91 est définie par l'équation :

$$C_2 = \cos\left[\frac{\pi(G-1)bf}{G}\right]\frac{\sin\frac{\pi(G-1)af}{G}}{\frac{\pi(G-1)af}{G}} \quad (13)$$

Sur la figure 14, les signes + et - indiquent la phase des lobes, le changement de signe correspondant à une inversion du contraste.

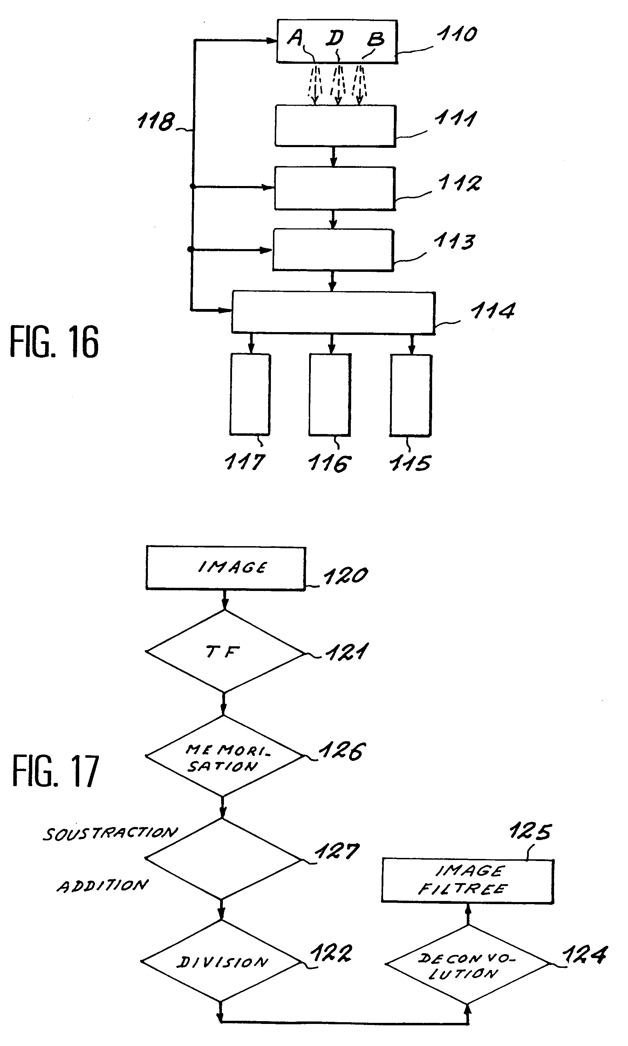

La courbe 92 de la figure 15 est le résultat de la soustraction des courbes 90 et 91 en tenant compte du fait que le deuxième lobe de la courbe 91 a une phase inversée par rapport au premier lobe et s'additionne au premier lobe de la courbe 90 lors de la soustraction.

On comprend qu'en modifiant les valeurs de a et b, il est possible de modifier la position et la forme de la courbe 92 de manière à l'adapter à la gamme de fréquences spatiales à éliminer.

Ainsi, par ce procédé, il est possible d'éliminer le bruit basse fréquence dû à l'absence d'uniformité de l'image qui résulte de l'anisotropie du spectre d'émission et de la courbe de réponse du récepteur. Par ailleurs, le bruit haute fréquence dû, par exemple, à la granularité du film radiologique peut aussi être éliminé.

Ce procédé peut être mis en oeuvre dans les appareils de mammographie où il est souhaité de détecter des microcalcifications dont les fréquences spatiales sont comprises entre 5 et 10 p.l./mm; dans ce cas, la bande passante sera comprise entre 4 et 12 p.l./mm avec une fréquence centrale de 8 p.l./mm.

Dans les appareils de radiologie vasculaire, notamment pour l'image du coeur, il est intéressant de ne pas "voir" la cage thoracique de fréquence spatiale 0,5 p.l./cm mais de détecter les vaisseaux sanguins de fréquence spatiale supérieure à 2 p.l./cm; dans ce cas, la bande passante sera comprise entre 2,5 et 7,5 p.l./cm et centrée sur 5 p.l./cm.

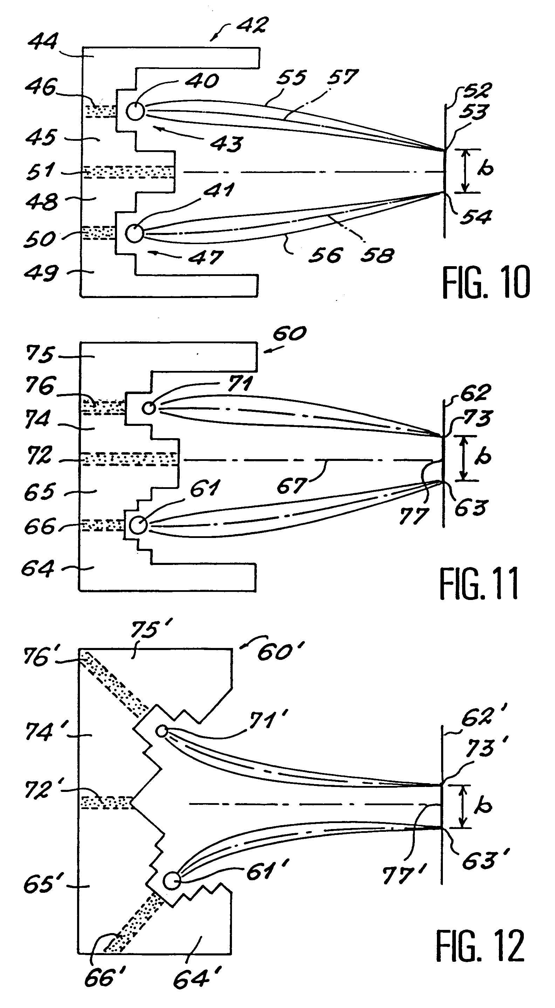

Afin de mettre en oeuvre le procédé d'élimination des fréquences spatiales indésirables selon l'invention, le système de radiologie de l'art antérieur décrit en relation avec la figure 1 doit être modifié de la manière suivante (figure 16). En premier lieu, la source 110 de rayons X doit émettre alternativement un faisceau unique provenant d'un foyer D de largeur a puis deux faisceaux identiques provenant de deux foyers A et B de largeur a séparés par une distance b. Dans une variante, le foyer unique D peut avoir une largeur différente de a. De telles sources de rayons X seront décrites ci-après en relation avec les figures 10 à 13. Ces faisceaux de rayons X traversent alternativement le corps 111 du patient pour être détectés par un récepteur 112. Les signaux détectés sont convertis en signaux numériques par un convertisseur analogique/numérique 113 pour permettre leur traitement par un calculateur numérique 114 réalisant des opérations de calcul qui seront définis en relation avec la figure 17. Le calculateur 114 fournit une image de la partie du corps du patient traversée par les faisceaux de rayons X soit par l'intermédiaire d'un dispositif de visualisation 115, soit sur un support 116 rigide ou semi-rigide, soit encore sous une forme numérique pour être stockée dans une mémoire 117. Le calculateur 114 commande (liaison 118) la source 110 de rayons X pour qu'elle fournisse alternativement un faisceau unique et deux faisceaux simultanés. Il commande également (liaison 118) le récepteur 112 et le convertisseur 113 pour traiter successivement l'image correspondant à un foyer unique puis l'image à deux foyers simultanés.

Les opérations de calcul décrites en relation avec la figure 2 doivent être modifiées selon l'invention comme le montre le diagramme de la figure 17. La première opération consiste à calculer (losange 121) la transformée de Fourier de chaque image 120 puis à mémoriser (losange 126) la transformée de Fourier $G_1(u,v)$ de l'image à foyer unique et celle $G_2(u,v)$ de l'image à deux foyers de manière à en effectuer la soustraction ou l'addition (losange 127). Le résultat de l'addition ou de la soustraction $G_3(u,v)$ est divisé (losange 122) par $P_3(u,v)$ qui est la différence des transformées de Fourier $P_1(u,v)$ du foyer unique et $P_2(u,v)$ des deux foyers simultanés ou des fonctions de transfert de modulation correspondantes. Le résultat de cette division est déconvolué (losange 124) pour obtenir une image filtrée 125 de l'objet.

Les tubes à rayons X qui comportent deux foyers sont connus mais les caractéristiques de chacun des foyers sont en général différentes car on souhaite obtenir des rayonnements X ayant des caractéristiques différentes.

Pour réaliser un tube à rayons X qui présente deux foyers simultanés, il faut utiliser deux sources d'émission d'électrons, c'est-à-dire deux filaments émissifs. Ceci peut être obtenu de différentes manières, par exemple par deux cathodes séparées comportant chacune un filament émissif mais il est alors impossible de modifier la bande spectrale visée.

Selon l'invention, il est préférable d'utiliser une seule cathode comportant deux filaments. Trois exemples de réalisation d'une telle cathode seront décrits en relation avec les figures 10, 11 et 12.

Dans l'exemple de réalisation de la figure 10, une cathode 42 comprend deux filaments identiques 40 et 41 qui sont disposés dans une pièce de concentration divisés en deux parties identiques, l'une pour focaliser les électrons émis par le filament 40 et l'autre pour focaliser les électrons émis par le filament 41. C'est ainsi que le filament 40 est situé au fond d'une rainure 43 en forme de marches d'escalier qui est réalisée en deux parties métalliques 44 et 45 accolées mais isolées l'une de l'autre par une cloison ou couche isolante 46.

De même le filament 41 est situé au fond d'une rainure 47 en forme de marches d'escalier qui est réalisée en deux parties métalliques 48 et 49 accolées mais isolées l'une de l'autre par une couche isolante 50. Les parties métalliques centrales 45 et 48 sont isolées l'une de l'autre par une couche isolante 51. La pièce de concentration comporte ainsi quatre parties métalliques 44,45,48 et 49 accolées mais isolées l'une par rapport à l'autre. Cette disposition permet d'appliquer des tensions différentes sur les différentes pièces métalliques et donc de modifier la focalisation des faisceaux d'électrons 55 et 56, c'est-à-dire les dimensions de leur point d'impact 53 et 54 sur l'anode 52 et notamment la dimension a. En outre, elle permet aussi de modifier la position angulaire de l'axe d'émission 57 et 58 desdits faisceaux pour modifier la distance b entre les points d'impact 53 et 54.

Pour obtenir un seul foyer avec une telle cathode, l'invention propose soit de faire converger les deux faisceaux 55 et 56 sur une même surface de l'anode 52, soit de n'utiliser qu'un seul des deux faisceaux en coupant par exemple l'alimentation électrique de l'un des filaments 40, 41.

Alors que la cathode décrite en relation avec la figure 10 est satisfaisante pour mettre en oeuvre l'invention, elle n'est pas suffisamment sophistiquée pour réaliser certaines autres fonctions mises en oeuvre dans les appareils radiologiques, telles que l'obtention de rayonnements X de caractéristiques différentes. A cet effet, il est connu d'utiliser des cathodes comportant deux filaments qui ont des caractéristiques différentes et qui sont utilisées successivement, c'est-à-dire de manière non simultanée. Pour continuer à réaliser les fonctions requises tout en mettant en oeuvre la présente invention, ces cathodes doivent être modifiées et les figures 11 et 12 montrent des exemples de telles modifications qui découlent de l'exemple de réalisation décrit en relation avec la figure 10.

Sur la figure 11, une cathode 60 comprend un premier filament 61 dont les dimensions sont telles qu'il donne naissance sur une anode 62 à un premier foyer 63 dit "Grand Foyer". Les électrons émis par le premier filament 61 sont focalisés et dirigés vers le foyer 63 par un premier dispositif de focalisation qui comporte deux pièces métalliques 64 et 65 accolées mais isolées l'une de l'autre par une couche isolante 66. Ces deux pièces 64 et 65 réalisent autour du filament 61, une pièce de concentration en forme bien connue de trois marches d'escalier.

La cathode 60 comprend un deuxième filament 71 dont les dimensions sont inférieures à celles du premier filament 61 et qui donne naissance sur l'anode 62 à un deuxième foyer 73 dit "Petit Foyer". Les électrons émis par ce deuxième filament 71 sont focalisés et dirigés vers le foyer 73 par un deuxième dispositif de focalisation qui comporte deux pièces métalliques 74 et 75 accolées mais isolées l'une de l'autre par une couche isolante 76. Ces deux pièces métalliques 74 et 75 réalisent autour du filament 71 une pièce de concentration en forme de deux marches d'escalier.

Les deux dispositifs de focalisation sont accolées par les parties métalliques 65 et 74 qui sont isolées l'une de l'autre par une couche isolante 72.

Le nombre de marches de chaque dispositif de focalisation ainsi que la hauteur desdites marches sont différents afin d'obtenir la focalisation et la déviation recherchées des faisceaux d'électrons dont l'intensité est généralement différente car les caractéristiques des filaments sont différentes : dimensions, longueurs, résistances, courants de chauffage. Les caractéristiques mécaniques des dispositifs de focalisation ne sont en général pas suffisantes pour obtenir les effets recherchés, aussi il est prévu d'appliquer des tensions différentes aux pièces métalliques 64,65,74 et 75 et c'est la raison de leur isolation électrique l'une par rapport à l'autre.

L'exemple de réalisation de la figure 12 est similaire à celui de la figure 11 avec cette différence que les axes des dispositifs de focalisation ne sont pas parallèles entre eux comme sur la figure 11 mais sont sécants et l'on obtient ce qui est appelé une cathode en forme de dièdre. Sur cette figure 12, les éléments similaires à ceux de la figure 11 portent la même référence mais affectés d'un indice "'".

Dans les tubes à rayons X à deux foyers utilisés dans les appareils radiologiques de type classique, on n'utilise qu'un foyer à la fois et il suffit de focaliser l'un des deux faisceaux d'électrons en un point 77 (ou 77') qui sera le même pour les deux faisceaux.

Pour utiliser un tel tube à rayons X afin de mettre en oeuvre la présente invention, il est nécessaire d'obtenir simultanément deux foyers 63 et 73 (ou 63' et 73') qui soient aussi identiques que possible et qui soient séparés par une distance déterminée b.

A cet effet, les caractéristiques mécaniques et électriques des dispositifs de focalisation de chaque filament ainsi que les valeurs des courants de chauffage desdits filaments sont déterminés pour permettre la modification de la focalisation des faisceaux afin qu'ils donnent naissance à des foyers identiques et la modification de leur déviation pour obtenir la distance b entre les foyers.

Il est important de pouvoir modifier la distance b afin de tenir compte du fait, notamment, que le grandissement G de l'appareil radiologique change selon le type de pose.

Pour déterminer les potentiels à appliquer aux pièces métalliques des différents dispositifs de focalisation et de déflexion des cathodes des figures 10,11 et 12, il est nécessaire d'effectuer des étalonnages du tube à rayons X comportant ladite cathode en faisant varier les tensions U appliquées aux différentes parties métalliques. Ces étalonnages ont été décrits dans la demande de brevet français 90 01249 déposée le 2 février 1990 mais seront à nouveau décrits ici dans leur application à la cathode 60, de la figure 11.

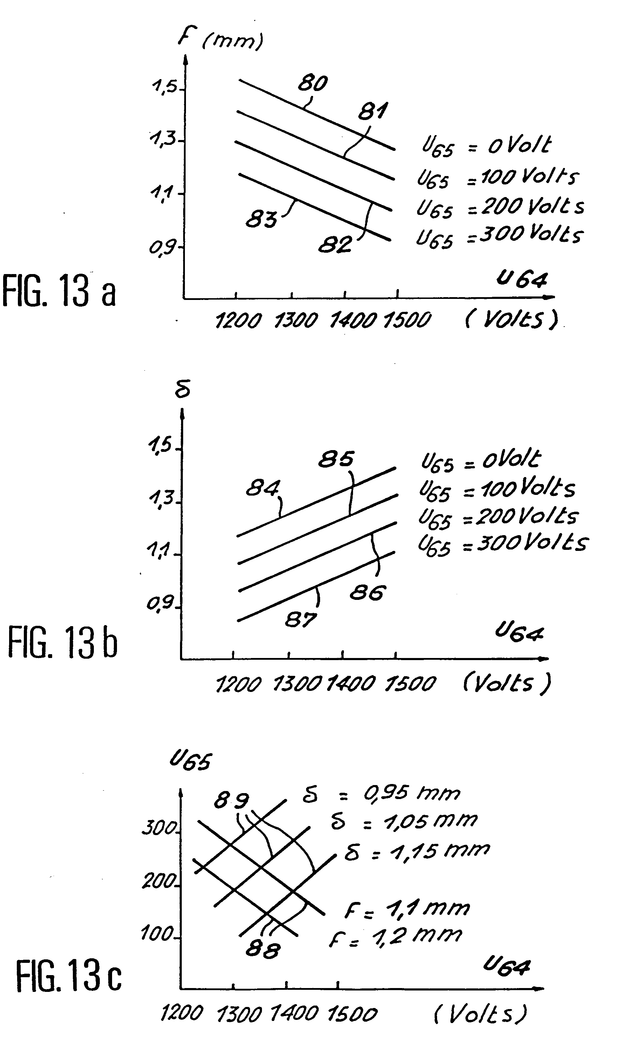

Un premier étalonnage consiste à mesurer la largeur f du point d'impact du faisceau d'électrons sur l'anode 62, c'est-à-dire la largeur du foyer du faisceau de rayons X, en fonction du potentiel $U_{64}$ appliqué à la partie 64 pour différentes valeurs du $U_{65}$ appliqué à la partie 65. On obtient les courbes 80 à 83 de la figure 13a qui correspondent respectivement à $U_{65}$ = 0 volt, -100 volts, -200 volts et -300 volts.

Un deuxième étalonnage consiste à mesurer la déflexion $\delta$ du faisceau d'électrons, c'est-à-dire le déplacement de son point d'impact 63 sur l'anode 62 par rapport à un plan ou axe médian 67, en fonction du potentiel $U_{64}$ et pour les mêmes valeurs de $U_{65}$. On obtient les courbes 84 à 87 de la figure 13b qui correspondent respectivement à $U_{65}$ = 0 volts, -100 volts, -200 volts et -300 volts.

La combinaison des courbes des figures 13a et 13b permet d'obtenir les deux réseaux de courbes de la figure 13c, c'est-à-dire $U_{65}$ en fonction de $U_{64}$ pour différentes valeurs de la largeur f du point d'impact (réseau 88) et pour différentes valeurs de la déflexion $\delta$ du faisceau (réseau 89). Sur cette figure 13c, les coordonnées des points d'intersection des courbes des deux réseaux 88 et 89 donnent les valeurs de $U_{64}$ et $U_{65}$ pour obtenir la largeur du foyer et de sa déflexion indiquées par les courbes sécantes.

Bien entendu, ces étalonnages décrits ci-dessus sont également à effectuer pour le faisceau contrôlé par les pièces 74 et 75.

En résumé, pour éliminer des objets de fréquence spatiale $F_g$, la formule (3) permet de déterminer les dis-

7

tances b à réaliser entre les deux foyers pour différentes valeurs du grandissement G qui varie habituellement entre 1,05 et 1,2 car, au-delà de cette dernière valeur, le rayonnement diffusé est éliminé par suite du trajet dans l'air.

Ensuite, les courbes de la figure 13c permettent de déterminer les potentiels à appliquer aux différentes parties des dispositifs de focalisation et de déflexion pour obtenir, d'une part, chaque espacement b = 2δ entre les foyers 63 et 73, soit une déflexion de b/2 par dispositif, et d'autre part, la même largeur a = f par foyer.

Par ailleurs, les caractéristiques de chaque filament permettent de déterminer le courant de chauffage pour obtenir la même énergie par foyer si on utilise des filaments différents.

Pour un appareil radiologique donné, ces différentes informations sont par exemple enregistrées dans la mémoire d'un microprocesseur qui, pour une certaine valeur du grandissement, donne les valeurs des potentiels à appliquer aux différentes parties métalliques de la cathode ainsi que les valeurs des courants de chauffage des filaments afin d'obtenir les deux foyers de largeur a espacés de la distance b.

Le système selon l'invention pour éliminer des objets à la fréquence spatiale $F_g$ comporte donc comme le montre la figure 3, un tube 100 à rayons X à deux foyers A et B dont la cathode comporte deux filaments identiques ou non qui sont associés chacun à un dispositif de focalisation et de déflexion. Les différentes tensions d'alimentation et de polarisation de ce tube 100 sont fournies par un dispositif 101 qui est sous le contrôle d'un microprocesseur 102. Ce microprocesseur comporte au moins une mémoire 103 qui contient les valeurs des tensions à appliquer au tube 100 ainsi que les courants de chauffage des filaments pour obtenir simultanément deux foyers identiques A et B de largeur a et d'espacement b qui permet d'éliminer la fréquence spatiale $F_g$ correspondant à une valeur nulle de la fonction de transfert de modulation.

Pour obtenir les déviations requises des faisceaux d'électrons, il a été décrit des exemples de réalisation dans lesquels les déviations étaient obtenues en appliquant des tensions de polarisation aux différentes parties des pièces de focalisation. Ces déviations peuvent être aussi obtenues par d'autres dispositifs tels que, par exemple, des électrodes supplémentaires qui seraient placées de part et d'autre de chaque faisceau et seraient isolées électriquement des pièces de focalisation. Ces pièces seraient portées par lesdites pièces de focalisation et constitueraient des prolongements des marches d'escalier. L'utilisation de telles électrodes supplémentaires permettrait de scinder les deux fonctions : l'une de focalisation réservée au pièces de focalisation à proximité des filaments et l'autre de déviation réservée à ces électrodes supplémentaires placées le long des faisceaux.

Au lieu de réaliser l'élimination de la fréquence $F_g$ en effectuant une image avec une source à deux foyers simultanés et en choisissant un zéro de la fonction de transfert de modulation selon la formule (3), l'invention propose également de réaliser cette élimination en effectuant deux images, l'une avec un foyer unique et l'autre avec un double foyer et en effectuant un traitement des images par soustraction ou addition par l'intermédiaire de leur transformée de Fournier.

Pour mettre en oeuvre ce deuxième aspect de l'invention, le tube à rayons X est similaire à ceux décrits ci-dessus en relation avec les figures 10 à 13 de manière à présenter deux foyers simultanés A et B mais il devra en outre être prévu pour présenter un foyer unique D. Comme on l'a indiqué ci-dessus, ce foyer unique D peut être obtenu avec les tubes à rayons X des figures 10 à 12, soit en faisant converger les deux faisceaux simultanés, pour constituer un foyer unique, soit en n'utilisant qu'un seul des deux faisceaux.

Pour que ce deuxième aspect de l'invention, savoir la réalisation de deux images, l'une avec un foyer unique et l'autre avec un double foyer, soit adaptable aux besoins du praticien, notamment par le choix de la fréquence $F_g$ à éliminer, l'invention propose également de déterminer pour chaque fréquence $F_g$ ou pour une bande de fréquences autour de $F_g$, les largeurs des foyers A, B et D, et la distance entre les foyers A et B pour obtenir l'élimination recherchée. Puis connaissant ces valeurs, de déterminer les valeurs des tensions à appliquer au tube à rayons X pour les obtenir selon les principes exposés en relation avec les diagrammes de la figure 13. Ce sont ces valeurs des tensions qui sont enregistrées dans la mémoire 103 (figure 3) et qui sont sélectionnées par la valeur du grandissement G et par l'information de la fréquence ou bande de fréquence $F_g$ à éliminer.

## Revendications

1. Dans un système radiologique comportant une source 110 de rayons X irradiant un objet (111) à examiner qui est situé à une distance c de ladite source (110), un récepteur (112) situé à une distance d dudit objet (111) pour détecter et amplifier les rayons X ayant traversé l'objet et un calculateur (114) pour effectuer différentes opérations de calcul sur les signaux fournis par le récepteur (112), un procédé permettant d'éliminer dans l'image de l'objet des fréquences spatiales $F_g$ indésirables ou des bandes de fréquences spatiales autour de $F_g$ qui comprend les opérations suivantes:

(a) réalisation d'une première image dudit objet (111) en l'irradiant par un faisceau issu d'un seul foyer (D) de la source (110),

(b) réalisation d'une deuxième image dudit objet (111) en l'irradiant par deux faisceaux issus d'un double foyer (A et B) de la source (110),

(c) calcul des transformées de Fourier de la première et de la deuxième images,

(d) addition ou soustraction des transformées de Fourier des première et seconde images,

(e) division du résultat de la soustraction par la transformée de Fourier du récepteur et par la différence des fonctions de transfert de modulation du foyer unique et du double foyer,

(f) calcul de la déconvolution du résultat de la division.

2. Procédé selon la revendication 1, caractérisé en ce que les fonctions de transfert de modulation du foyer unique (D) et du double foyer (A et B) sont choisies de telle manière que leur soustraction ou leur addition conduisent à une fonction de transfert de modulation résultante qui élimine les fréquences spatiales $F_g$ ou les bandes de fréquences spatiales autour de $F_g$.

3. Procédé selon la revendication 2, caractérisé en ce que les largeurs a des différents foyers (A, B et D) et la distance b entre les foyers du double foyer sont choisies pour que la fonction de transfert de modulation résultante élimine les fréquences spatiales $F_g$ ou les bandes de fréquences spatiales autour de $F_g$.

4. Procédé selon la revendication 3, caractérisé en ce que le foyer unique (D) et les foyers (A et B) du double foyer ont une même largeur a de manière que les fonctions de transfert de modulation correspondantes présentent des valeurs nulles à des fréquences spatiales communes.

5. Procédé selon la revendication 3, caractérisé en ce que le foyer unique (D) et les foyers (A et B) du double foyer ont une largeur différente.

6. Tube à rayons X pour mettre en oeuvre le procédé des revendications 1 à 5, caractérisé en ce qu'il comprend une cathode (42,60,60') comportant deux filaments (40,47 ou 71,61 ou 71',61') émettant chacun un faisceau d'électrons, chaque filament étant associé à un dispositif de focalisation et de déviation dont les caractéristiques mécaniques et électriques ainsi que les tensions appliquées sont telles que les deux faisceaux d'électrons donnent naissance, sur une anode (52,62,62') disposée en face de ladite cathode, à une source unique de rayons X ou à deux sources (53,54 ou 73,63 ou 73',63') de rayons X, les deux sources de rayons X ainsi obtenues ayant des répartitions énergétiques spatiales aussi identiques que possible et étant séparées par la distance b.

7. Tube selon la revendication 6, caractérisé en ce que les deux filaments (40,41) ainsi que les deux dispositifs de focalisation et de déviation (44,45,46 et 48,49,50) sont identiques, chaque dispositif de focalisation et de déviation comportant deux pièces métalliques (44,45 ou 48,49) qui sont disposées de part et d'autre du filament associé et isolées électriquement l'une de l'autre par une cloison (46 ou 50) de manière à pouvoir être polarisées à des potentiels différents pour obtenir sur l'anode (52) soit une source unique de rayons X, soit deux sources de rayons X séparées par la distance b.

8. Tube selon la revendication 6, caractérisé en ce qu'il comprend un premier filament (71 ou 71') prévu pour donner une première source de rayons X (73 ou 73') ayant des dimensions déterminées, un deuxième filament (61 ou 61') prévu pour donner naissance à une deuxième source de rayons X (63 ou 63') ayant des dimensions plus grandes que la première source, un premier dispositif de focalisation et de déviation (74,75,76 ou 74', 75', 76') associé au premier filament (71 ou 71') pour focaliser et dévier le faisceau d'électrons émis par le premier filament en un premier point (73 ou 73') de l'anode (62 ou 62') et un deuxième dispositif de focalisation et de déviation (64,65,66 ou 64',65',66') associé au deuxième filament (61 ou 61') pour focaliser et dévier le faisceau d'électrons émis par le deuxième filament en un deuxième point (63 ou 63') de l'anode (62 ou 62'), chaque premier et deuxième dispositif de focalisation et de déviation comportant deux pièces métalliques (74,75 ou 74',75', 64,65 ou 64',65') qui sont disposées de part et d'autre du filament associé et isolées électriquement l'une de l'autre par une cloison (76 ou 76', 66 ou 66') de manière à pouvoir être polarisées à des potentiels différents pour obtenir sur l'anode (62 ou 62') des sources de rayons X ayant des dimensions sensiblement identiques et une distance b entre lesdites première et deuxième sources de rayons X, lesdits premier et deuxième filaments étant alimentés par des courants dont les intensités conduisent à des répartitions énergétiques sensiblement identiques pour lesdites sources de rayons X.

9. Système pour obtenir soit une seule source D de rayonnement X, soit deux sources (A et B) de rayonnement X de dimensions sensiblement identiques et séparées par une distance b variable, caractérisé en ce qu'il comprend un tube (100) à rayons X comportant deux sources (A et B) de rayonnement simultanées selon l'une des revendications 6,7 ou 8, un dispositif d'alimentation (101) pour générer les tensions d'alimentation et de polarisation dudit tube (100) à rayons X et un microprocesseur (102) pour commander ledit dispositif d'alimentation (101), ledit microprocesseur comportant au moins une mémoire (103) dans laquelle sont enregistrées, pour chaque fréquence $F_g$ et grandissement G, les valeurs desdites tensions d'alimentation et de polarisation pour obtenir soit une seule source (D) de rayonnement X, soit deux sources simultanées (A et B) de rayonnement X séparées par une distance b, ladite mémoire (103) étant adressée pour la valeur de $F_g$ et celle du grandissement G.

# FIG. 1

*ART ANTERIEUR*

10

| PATIENT | 11 |

| RECEPTEUR | 12 |

| CONVERTISSEUR | 13 |

| CALCULATEUR | 14 |

17    16    15

| IMAGE | 20 |

TF — 21

DIVISION — 22

FILTRAGE — 23

# FIG. 2

*ART ANTERIEUR*

DECONVO-LUTION — 24

| IMAGE FILTREE | 25 |

# FIG. 3

100    101    102    103

D

A    B    G    F g

FIG. 4

FIG. 5

FIG. 6

$$\frac{G}{G-1}\frac{1}{2b}$$

$$\frac{G}{G-1}\frac{1}{2a}$$

FIG. 7

FIG. 8

FIG. 9

FIG. 10

FIG. 11

FIG. 12

FIG. 13 a

FIG. 13 b

FIG. 13 c

FIG. 14

FIG. 15

16

FIG. 16

FIG. 17